# EUROPEAN PATENT APPLICATION

(11) **EP 4 848 184 A1**
(43) Date of publication of application: **02.12.2026**
(21) Application number: 25305780.6
(22) Date of filing: 29.05.2025
(51) Int. Cl.: G06Q 20/38, H04L 9/32

(54) **SECURE DIGITAL RESOURCE PROCESSING SYSTEM**

(71) Applicant: Twinlife, 75002 Paris (FR)
(72) Inventor: CARREZ, Stéphane, 92040 Issy-les-Moulineaux (FR)
(74) Representative: Maucher Jenkins Patent- und Rechtsanwälte Partnerschaft mbB

(57) **Abstract**

A system of digital resources and methods of processing them are described. There is provided a method comprising verifying ownership of a digital resource by a first device, wherein the digital resource is recorded in the first device and in a database of a first server, wherein the digital resource comprises an owner signature. The verification of ownership of the digital resource comprises generating, at the first device, a first public key and a first private key using a cryptographic algorithm; sending, by the first device, a request for a challenge along with the first public key to a first server; receiving, at the first device, a first challenge from the first server; signing, by the first device, the first challenge with the first private key; receiving, at the first server, the signed first challenge; and verifying, at the first server, whether the digital resource is owned by the first device by checking the signed first challenge and the owner signature against the first public key.

## Description

### Technical field

Aspects of the present disclosure relate to provision of a secure digital resource and secure processing thereof. More particularly, a method of processing a digital resource, comprising ownership verification, is provided.

### Background

As social interactions and transactions take place online ever more frequently, different systems that allow them to be implemented and processed have been developed. In many situations, such interactions and transactions need to be handled with high levels of security and anonymity. For example, there are cryptocurrencies that utilise blockchain technology, which are managed in a decentralised network and are effective against unauthorised tampering. However, blockchains by nature involve storing transaction histories and tracking is possible. There is a desire to provide an architecture that is highly secure against unauthorised tampering of ownership of a digital resource (in other words, theft) such as a currency, but which also prioritises user privacy, so that no useful information, or a minimal amount of information, relating to the ownership or processing of a digital resource is accessed or retained, except where necessary by those entities that directly record and handle the resource, until they are no longer required to do so.

### Summary of the invention

It is herein disclosed a method and system that allow users to exchange digital resources securely and anonymously. The architecture behind the system and method can be described as one that allows, and requires, some digital content to verified in terms of its ownership. In particular, every time before an action such as a transaction is implemented on a piece of digital content, a process of verification is carried out that involves the device that currently owns the content and at least one server responsible for managing the content system. This architecture ensures private, trace-free transactions, for example, while protecting user anonymity. This is done by use of cryptographic algorithms, avoiding traceable technology such as blockchain.

The digital resources may comprise a digital currency, and the exchanges between users can be a way for users to pay each other; however, the system and method are not limited to transactions of a financial nature involving digital currency.

In accordance with an aspect of the present invention, there is disclosed a method of processing a digital resource, comprising verifying ownership of the digital resource by a first device. The digital resource is recorded in the first device and in a database of a first server, and comprises an owner signature. The verification of ownership of the digital resource comprises: generating, at the first device, a first public key and a first private key using a cryptographic algorithm; sending, by the first device, a request for a challenge along with the first public key to a first server; receiving, at the first device, a first challenge from the first server; signing, by the first device, the first challenge with the first private key; receiving, at the first server, the signed first challenge; verifying, at the first server, whether the digital resource is owned by the first device by checking the signed first challenge and the owner signature (in the database) against the first public key.

The method may further comprise, after the step of signing the first challenge with the first private key: sending, by the first device, the digital resource and the signed first challenge to a second device; generating, at the second device, a second public key and a second private key using the cryptographic algorithm; sending, by the second device, a request for a challenge along with the second public key to the first server; receiving, at the second device, a second challenge from the first server; signing, by the second device, the second challenge with the second private key; receiving, at the first server, the digital resource and the signed second challenge, alongside said signed first challenge, from the second device; verifying, at the first server, that the signed second challenge is signed by the second device by checking the signed second challenge against the second public key; wherein the method further comprises, upon successfully verifying that the digital resource is owned by the first device, terminating ownership of the digital resource by the first device, and assigning ownership of a new digital resource to the second device.

Preferably, the step of sending by the first device, the digital resource and the signed first challenge to a second device comprises establishing a direct peer-to-peer connection between the first device and the second device.

Preferably, a new public key and a new private key are generated by the first device at every instance of verifying ownership.

Preferably, the owner signature is a signature that is previously generated by the first device using the cryptographic algorithm to prove ownership of the digital resource by the first device at that time (the moment of generation).

Preferably, the digital resource further comprises a server signature that is previously generated by one of a plurality of servers using the cryptographic algorithm to prove origin of the digital resource (the origin being any one of the servers, for example), wherein the plurality of servers comprise the first server. More preferably, the digital resource comprises a plurality of server signatures, wherein each server signature is previously generated by a respective different one of the plurality of servers.

Preferably, the first public key and first private key are generated based on one or more properties of the digital resource.

Preferably, the method further comprises, subsequent to successfully verifying that the digital resource is owned by the first device, implementing a transaction order involving the digital resource, and preferably the first public key and first private key are generated based on the transaction order.

Preferably, the digital resource comprises a first identification string and the new digital resource comprises a second identification string that is different from the first identification string. Preferably, the digital resource is associated with a first property and the new digital resource is associated with a second property identical to the first property. Optionally, each of the first property and second property is a value represented as a fraction of two integer values. Optionally, the property may be a value, if the digital resource is associated with a virtual currency, for example.

Optionally the cryptographic algorithm is Ed25519.

There is also disclosed a system, comprising one or more servers and one or more devices, configured to carry out the method according to any one of the preceding claims.

In order that the present invention be more readily understood, various aspects of specific embodiments will now be described in conjunction with the attached drawings.

### Brief description of the drawings

Fig. 1 shows a flowchart illustrating a method of processing a digital resource including ownership verification in accordance with an embodiment.
Fig. 2 shows a flowchart illustrating a method of processing a digital resource including ownership verification and transaction in accordance with an embodiment.
Fig. 3 is a graphical representation of an operation performed at and between two user devices and a server in accordance with an embodiment.
Fig. 4 is a graphical representation of an operation performed at and between a plurality of servers and a user device in accordance with an embodiment.

### Detailed description of embodiments

Various aspects of the invention are described below.

### Overview

It is herein disclosed a system and related methods of creating, maintaining and processing digital resources of a certain type. In this system, the digital resource is a digital object or file (which can be described as a "note" or record) that contains information and represents value to a user or device that owns it. For example, each resource/note may be associated with a certain amount of virtual currency ("virtual coins") that can be bought, exchanged between users and sold for a physical currency. However, this digital resource is not limited to this nature and can have other applications other than financial ones; for instance, a digital file may instead carry sensitive non-monetary data.

In the following description, the terms "digital resource", "resource", "digital note" and "note" are interchangeably used.

The system and related architecture are designed so as to provide a very high level of security and anonymity in every operation involving one or more of the digital notes. Whenever an operation is to be carried out, such as when a note of this type is created, transferred from one user to another, or invalidated (an example of invalidation of a note is its sale), the ownership and/or the current validity of the note is verified afresh. The verification process will involve the device(s) involved in that action, and at least one server in the system responsible for administering the system and the notes. The server(s) and user devices that are set up (e.g. with appropriate software/apps) to use this system to implement the notes have secure storage means that are configured to store a record of the notes and transactions with which they are or have been involved.

Each digital note may comprise: an identification number that uniquely identifies the note, one or more cryptographic signatures created using a cryptographic algorithm, and one or more other properties (an example of a property being a number representing the note's worth).

A preferred example of the cryptographical algorithm is Ed25519, which is a high-performance public-key signature algorithm based on elliptic curve cryptography. It is known for its speed, security, and resistance to side-channel attacks. For convenience, the examples below refer to the use of Ed25519, but the invention is not limited to thereto as other signature algorithms can be used instead of or in addition to Ed25519.

A digital note, when created, originates from one of the authorised servers in the system; it is then signed by the user device (i.e. the device that owns the digital resource - it is understood here and below that "the device owns the resource" is equivalent to meaning "the human user of the device owns the resource"), and then cross-signed by at least one server. The user's device signature proves the ownership of the note, and the server's or servers' cross-signature(s) prove that the note was produced by an authorised server and is correctly owned by the user's device.

The servers in the system perform several roles. A main function is to prove or verify the ownership of a digital note by using cryptographic signatures during note creation and later when required. When the ownership is proven, a second role of the servers is to sign the note and record signatures associated with it. Although the system may contain only one server, it is highly preferred that a plurality of servers are provided, to increase the security of the architecture and prevent malicious forgery of digital notes.

User devices use a different Ed25519 key to sign each digital note, even within the same device. This means that, even knowing the public keys, it is not possible to know who owns the note; when looking at different notes, it is not possible to know whether they are owned by the same device. Furthermore, when a note is exchanged between users, the note's identification number is changed, that is equivalent to saying the old note is invalidated and a new note is created that is without any link with the original one (except that both carry the same virtual currency value, for example).

When a user wishes to use a digital note in some operation, the user device needs to prove the ownership of the Ed25519 key that was previously used to sign the note. To do so, the user device requests a challenge to an authorised server for its public key. Preferably, the challenge is a random string that is valid for a limited period of time (e.g. 5 minutes or less). The device signs the challenge with the Ed25519 private key and give the signature to the server when asking the server to perform an operation on the note. The server verifies the challenge signature as well as the note's owner signature (a copy of the owner signature that the server already has in its own records) against the public key. If both signatures are valid, the challenge signature proves that the device owns the private key used to sign the note.

Transferring an amount of virtual currency represented by a digital note between two users (user devices) is preferably made through the WebRTC data channel, which can also be used to exchange messages between the two devices.

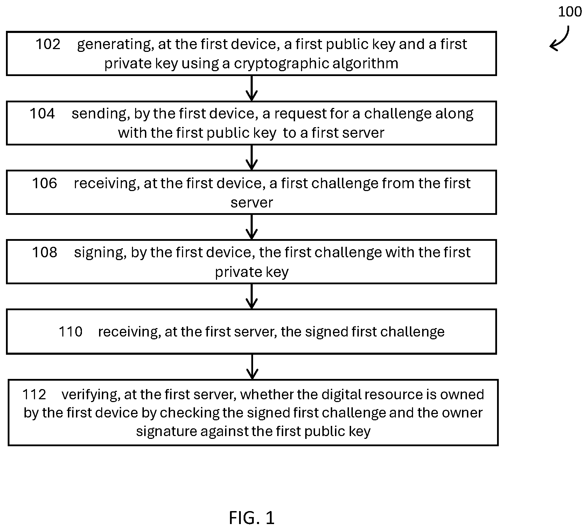

A method 100 to verify ownership of the digital note 14 is now described with reference to Fig. 1. The user device 10 generates a public key 12A and a private key 12B using a cryptographical algorithm (e.g. Ed25519 keys) (step 102), and requests a challenge from the server 30 (step 104), the request preferably having a reference to the digital note (such as its ID number). The public key is sent along with the request to the server. The device 10 receives the challenge 32 (step 106), and signs the challenge by using its private key (step 108). The server 30 receives the signed challenge 32 (i.e. containing the Ed25519 signature of the user device) (step 110). The server is thus able to verify whether the digital note 14 is owned by the device 10 by checking the signed challenge and the owner signature (preferably the copy of this owner signature that is available in the server's own database) against the device's public key (step 112).

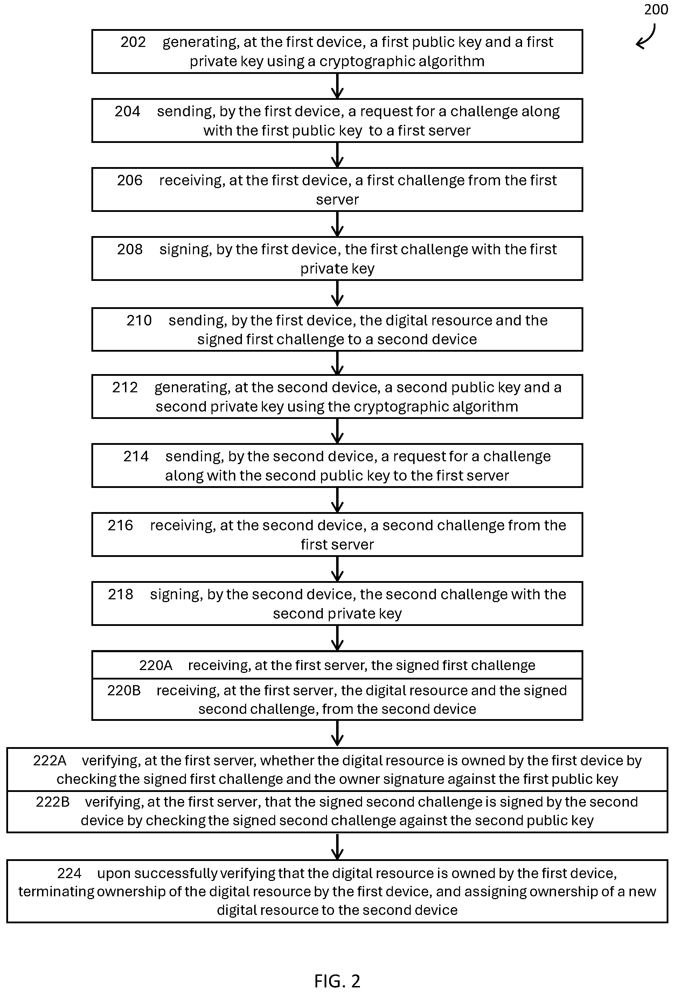

A typical example of an operation that involves this verification procedure is when a first user device (a source device) 10 wants to transfer the note 14 (and the value it represents) to a second device (a target device) 20. A method 200 is now described with reference to Fig. 2 (the steps mentioned above in relation to Fig. 1 can be elaborated in this context). The first device 10 generates a public key 12A and a private key 12B using a cryptographical algorithm (e.g. Ed25519 keys) (step 202), and requests a first challenge from the server 30 (step 204), the request preferably having a reference to the digital note 14 (such as its ID number); the public key is sent along with the request to the server. The first device 10 receives the first challenge 32 (step 206), and signs the challenge by using its private key (step 208). It sends to the second device 20 the digital note 14 and the signed first challenge 32 (i.e. containing the Ed25519 signature of the first device) (step 210). When the second device receives the note, it creates its own Ed25519 public and private keys 22A,22B (step 212). It requests a second challenge from the server 30 (step 214), with public key 22A being sent along with the request, and receives the second challenge 34 (step 216), and signs it using its private key 22B (step 218). It then sends to the server the digital note 14, the signed first challenge 32 that proves the first device's current ownership of the note, and the signed second challenge 34 that proves intended target ownership (in other words, proves ownership of the second private key that signed the second challenge). The server 30 has thus received both the second challenge and the first challenge via the second device 20 (steps 220A and 220B). The server is thus able to check both signed challenges against the public keys 12A,12B and owner signature against information held in the server database (steps 222A and 222B). If everything is successfully verified by the server, the server 30 terminates the ownership (by the first device 10) and/or validity of the original digital note 14, and assigns ownership of a new/different note (associated with the same amount of virtual credit and/or other properties) to the second device 20, effectively transferring the amount of credit from first device/user to second device/user (step 224). Further signatures (ownership signature by the second device, and/or authentication signatures by the server(s)) may be applied to confirm ownership of the new note (see below). Note that some steps, such as 220A and 220B, and 222A and 222B, may be simultaneous.

The first and second devices preferably communicate via a direct peer-to-peer (P2P) connection, that can also be used for messaging (for example to notify the other device of an upcoming transaction).

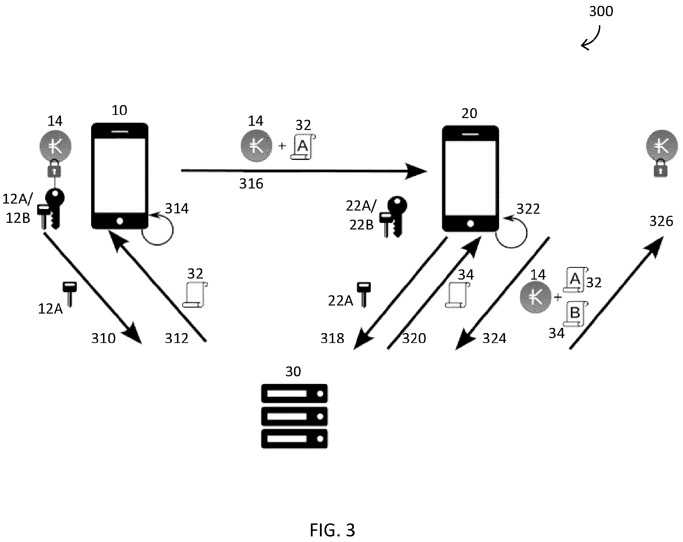

Fig. 3 is a simple graphical representation 300 corresponding to the method 200 of transfer operation described above, in relation to Fig. 2.
310: Device 10, having a pair of public key 12A and private key 12B, and a digital note 14 already bearing the device's ownership signature, requests a challenge from the server 30 and sends the public key 12A.
312: Device 10 receives the challenge 32 from the server 30.
314: Device 10 signs the challenge 32 with its private key 12B.
316: Device 10 sends the signed challenge 32 and digital note 14 to device 20, preferably through a P2P connection.
318: Device 20 creates a pair of public key 22A and 22B, and requests a challenge from the server 30 and sends its public key 22A.
320: Device 20 receives the (second) challenge 34 from the server 30.
322: Device 20 signs the challenge 34 with its private key 22B.
324: Device 20 sends the signed challenge 32, the signed (second) challenge 34, and the digital note 14 to the server 30.
326: Server 30, after successful verification, completes the effective transfer of the value represented by the originally digital note 14, as described elsewhere.

As mentioned above, a (valid) digital note i.e. the digital resource of the type herein disclosed comprises cryptographic signatures that serve as proof of ownership. This includes an owner signature, i.e. a signature applied by the user device (using its private key) when it first came to acquire and own this note. This also includes at least one server signature (also known as a cross-signature), applied after the owner signature was in place, that serves as additional proof that the note is an authentic one originating from the system and that its ownership was already checked at least once. Preferably there are more than one server-signatures, i.e. multiple authorised servers of the system have cross-signed the note. (It is noted that if multiple servers cross-sign a note in a transaction, this fact is transparent from the device point of view.)

Additionally, the digital note may have one or more properties that include but are not limited to the following:
- a unique identification number (ID), allocated by a server of the system;
- an amount (typically representing the value in the virtual currency being carried by the note); preferably this is a number represented by two integer values to allow representing fractions: this gives enough flexibility without having to use imprecise floating point for the amount representation;
- a class, that controls and defines whether the note can participate in a given transaction or transaction type: some classes may restrict the transaction (e.g. to forbid exchange between different classes), or control how the note is sold (i.e. converted to real currency or crypto-currency).

The information/properties of a note described above may be the only information stored on the device and on the server, for the purpose of verifying and proving ownership of the note.

As mentioned above, when a digital note is "transferred" to another device, it means a new note is created having the same value, unit and class (and other properties where appropriate) but a new ID number, and the original (source) digital note is invalidated on the server database, for example by registering its termination date (i.e. the transaction date). A sale of the note by a device (e.g. conversion into real currency) also leads to its invalidation, similarly. Accordingly, even in the event that the record of the note in the source device database still remains or is unchanged, the next time the user or any other entity tries to make a transaction on the note, at least the server database knows that the note has already been made invalid.

For additional security, when public/private key pairs are generated by each respective user device using a cryptographic algorithm in relation to a digital note, properties of the note itself are used as input into the algorithm, i.e. the keys are generated tailored to the note (such as based on its ID number). In the case that the keys are generated in the event of an intended transaction, properties of the transaction may also be taken into account in the generation (e.g. based on a reference to the intended owner or a transaction order ID).

We now describe, omitting some verification details, two exemplary types of transactions that can be carried out with the digital resource herein disclosed, when associated with a virtual currency (which may be a bespoke virtual currency). It is to be understood that not all the steps and aspects mentioned in these examples are essential; some are merely mentioned as preferable non-limiting options to assist understanding the invention; some steps may be simultaneous or their order can be changed without affecting the results.

### Example: Buying and sharing

- A first user, on a first user device such as a smartphone, laptop or any other electronic device, buys a specific amount of virtual currency on an online vendor (e.g. Google or Apple app stores); this transaction involves a purchase order and a purchase token being created.
- The purchase order and purchase token are sent to an authorised server in the system, and verified and validated by the server, with the support of the online vendor server (e.g. Google and Apple servers), to verify the transaction.
- When the purchase order is validated, the server creates a new signed digital resource/note that represents the amount of currency bought in the purchase order; preferably, it assigns an ID number to the note.
- The note is sent ("inserted") to the first user device and signed by the user device to mark the ownership of the note. (The server later adds a server signature to complete the validation.)
- The first user or user device indicates a second user device to give an amount of virtual currency via the system.
- A connection is established; this is preferably a direct P2P connection, such as a WebRTC data channel, which is secure and protects anonymity.
- The second device asks the server to transfer the note to it.
- The second device receives the note, and stores it in its own storage.
- The first user device removes the note from its storage.
- On both user devices, a record of the transaction is recorded in a database. The transaction is not recorded on the server itself.

### Selling

- The first user device, owner of a digital note (corresponding to a certain value in a virtual currency), requests to sell it (i.e. convert to a real non-virtual currency such as Euros). A verification process is carried out.
- A sell order is created on the server and the server returns it to the user device.
- The user device is redirected to an online payment/transaction platform, such as Payoneer, with the sell order, and enters its bank account.
- After validation by the online payment platform, the server receives an acknowledgement with the sell order.
- The server marks the note as "sold" or otherwise invalidated.

Note that, preferably, the server does not know whether the actual transaction has been completed, and so cannot inform the device of such completion. Instead, the user device probes the state of the sell order regularly to know when the transfer is completed.

As mentioned above, a user device that is part of this system maintains, in its storage:
- a list of digital notes, each identified by a unique ID;
- a list of (payment) transactions representing the exchange of the notes and thus the currency represented, whether bought, received, sent or sold.

A transaction may belong to one of several states, as some operations may take time to be executed, such as:
- CREATED: the payment transaction is created;
- VERIFIED: the payment transaction has been verified by the server;
- PENDING;
- EXECUTED: the payment transaction has been executed successfully;
- CANCELLED: the payment transaction has been cancelled.

Verification procedures are herein described in further detail.

### Proving ownership of a digital note

Before any operation involving a digital note, a device needs to prove ownership of the note and its associated Ed25519 private key.

As mentioned, the ownership validation procedure comprises the following:
- The device requests and receives, from a server of the system, a challenge for the public key.
- The device builds an Ed25519 signature with the server challenge, and, optionally, with other information that is specific to the operation being executed (such as the note ID number).
- The device sends the challenge and its signature to the server when executing the operation. Preferably, for most operations, the challenge token and the signature are passed to the HTTP Authorization header as a Bearer token.

There are several items that are verified before proceeding.
- The server verifies the challenge token and signature with the public key; this proves that the device owns the associated private key.
- The server looks at its own database, to find a record of the note or purchase token onto which the operation is asked; this allows the server to retrieve the allocated note number, amount and current owner signature.
- The server verifies that the note is still valid.
- The server verifies the owner note signature with the same public key; this proves that the device still owns the note.

We now describe, in further detail, two further examples of operations that can be carried out with the digital resource herein disclosed, when associated with a virtual currency (which may be a bespoke virtual currency). It is to be understood that not all the steps and aspects mentioned in these examples are essential; some are merely mentioned as preferable non-limiting options to assist understanding the invention; some steps may be simultaneous or their order can be changed without affecting the results.

### Example: Purchase of currency

In a first phase, a user's purchase of an amount of virtual credit from an online selling platform (such as Google or Apple online stores):
- After the user's purchase, the store provides a purchase order that identifies the transaction on the store. (The purchase order is to be validated on a server of the system, and for this it needs to be associated with an Ed25519 key.)
- The device creates an Ed25519 key that is associated first with the purchase order (and it will later be associated with a digital note).
- The device requests and receives, from the server, a challenge for its public key.
- The device builds a first Ed25519 signature with the server challenge and also based on the purchase order.
- The device sends the purchase order, the challenge and signature (i.e. together the "signed challenge") to the server that validates the purchase order by using the store server (e.g. Apple/Google server).
- After successful validation by the server, the server allocates a new digital note, and associates it with the purchase order (i.e. add information relating to the purchase order in the content of the note, as part of its properties, for example).
- The server saves this note in its database, the purchase order as well as the challenge and signature provided by the device.
- The note is returned to the device but it is not signed.

Note that, by this point, the digital note is not "complete" or valid, as it has no owner signature and no server signature, yet. However, it has a note ID number and is already linked to the purchase order which is signed by the private key (hence, one can already prove the ownership of the purchase).

Note that, preferably, the purchase order mentioned above comprises the following information or properties:
- a merchant type that identifies the store,
- a store ident (number) that represents what was bought in the store (and is specific to the store),
- an order identification number that was created by the store,
- a purchase token that validates the purchase on the store

A second phase comprises signing and thus validating the ownership of the digital note that has been generated and returned to the user device.
- The device builds a second Ed25519 signature using the ID number of the note.
- The device requests and receives a second challenge from the server.
- It builds a signature with the (second) challenge token and the purchase order.
- It proceeds with the purchase token validation on the server by sending the two signatures and the challenge token.

From the server's point of view, several things are verified.
- The server verifies the (second) challenge signature with the public key; this proves that the device owns the associated private key.
- The server looks at the database to find the purchase order associated with the note number. This allows retrieval of the information used by the purchase order (such as the currency value involved, and other related information) as well as the purchase order signatures, and can verify the purchase order is still valid.
- The server verifies the purchase order signature with the public key: this proves ownership of the purchase order.
- The server verifies the note's owner signature with the same public key: this proves that the right device has signed the digital note information.
- When all verifications are done and ownership proved to be correct, the server signs the digital note that has the owner signature, resulting in a server signature in the note.
- The server updates the note in the database to record the owner signature and server signature.

### Example: Transfer of currency (from a first user device to a second user device)

In a first phase, a payment transaction is created, involving the following steps. Some steps may be optional. Note that, because the transfer of currency under the system is made using P2P communication, it is not immediate and some preparation may be necessary.
- A payment transaction is created in the database of the first user device to record information for the transfer.
- A new digital note is prepared and reserved for the transfer. The note preferably has the same amount as defined by the required transfer. The note cannot be used on another transaction; in other words, it is "locked" until either the P2P communication proceeds with the transfer, or the transaction is cancelled, for example.
- Optionally, a transaction descriptor is created to represent the transfer operation within a conversation or messaging with a contact or within a group.
- The P2P connection is established between the source device (first device) and target device (second device), as if the user has sent a message. This step may be delayed until the two devices are able to reach each other.

In a second phase, the P2P transfer is carried out after the P2P connection is established between the two devices, involving the following steps. Some steps may be optional.
- The first device requests and receives from the server a challenge for the public key associated with the note to transfer.
- The first device computes the Ed25519 signature of the note with the challenge.
- The first device sends to the target device the challenge and the signature as well as the digital note.
- The second device receives the above, and creates an Ed25519 key for the note received.
- The second device requests and receives from the server a (second) challenge for the public key.
- The second device receives from the server a new note ID (identifier).
- The second device computes the Ed25519 signature of the new note with the second challenge.
- The second device computes the Ed25519 signature of the new note with its amount.
- The second device sends the two challenges, signatures and the digital notes to the server, requesting the server to transfer the ownership of the note.

In a third phase, the payment transaction is completed, involving the following steps. Some steps may be optional.
- The second device inserts the note in its database and updates the payment transaction (to mark it as EXECUTED).
- The second device sends an acknowledgment to the first device through the P2P connection.
- The first device updates the associated payment transaction and mark it as EXECUTED, in its database. The note is no longer valid (it cannot be used) and can be removed.

Note that if the P2P connection is interrupted in the middle, it will be re-attempted; if the transfer has completed, retrying it will not cause any problem and will produce the same results.

### Server Architecture

A server in the present system authorised to take part in administering and processing the digital resources is herein described.

The main role of each of the servers is to sign cryptographically the digital resources/notes which are exchanged by users. Preferred aspects include:
- Each server is associated with its own database which does not need to be replicated/backed up, as long as there are at least two servers in the signing chain.
- The server may comprise its associated database or is in communication with the database.
- The server databases of different servers can communicate with each other, via the respective servers or otherwise (e.g. directly).
- When a server is started, it synchronises with other servers, and imports or updates the note records depending on differences and signatures. When a new server is added in the signing chain, it will import the note from other servers provided that they are trusted.
- Each server has its own private key to sign a digital note.
- Preferably, a digital note is signed by two or more servers before returning the result to a device (cross-signing).
- Preferably, additional servers can be added in the signing chain.
- The server signing keys can be changed without invalidating a previously signed note.
- Preferably, a server can be revoked, for example if it has been compromised. In such an event, in a note, only server signatures dated prior to the revoke date of that server are accepted.
- Preferably, servers are located in different physical data centres.
- Preferably, for a server to be considered a trusted server, its public key should be signed by at least three platform-trusted administrators; administrators are themselves signed by each other to become trusted administrators.
- Server operations are idempotent, that is the same operations can be performed several times, with the same result, for example in new challenges as long as the owner has not changed.

Server operations include:
- providing an authentication challenge: when asked by a user device to prepare an order on a given digital source that it owns, it receives from the device the public key for a challenge, and the server returns a random challenge string (this returned challenge preferably has a limited-duration validity);
- verification: verifying the validity of a note, validity of the signature with the challenge and note, and validity of the note owner signature with the public key passed in the authentication challenge;
- transfer: after receiving a digital note and two challenge signatures (one for the current owner/first "source" device and another for the new owner/second "target" device), verifying the validity of a note, validity of the owner signature with the owner challenge, note and public key, and validity of the new owner signature with the challenge, note and public key;
- split and merge: the server may also have the ability to split or merge one or more digital notes before a transfer.

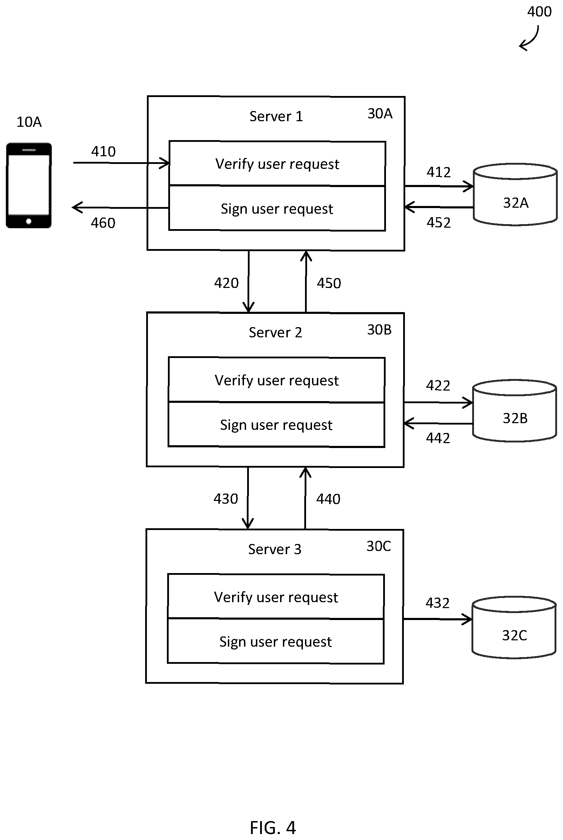

Fig. 4 is a simple graphical representation illustrating a process of handling a request from a user/device 10A involving a plurality of servers in the system. In this example, three servers 30A,30B,30C are illustrated. The request may be a request to verify ownership of a digital note.
410: Device 10A sends a request to the first server 30A, which comprises means to verify the request. 412: In order to do so, the server communicates with its associated database 32A, for example to retrieve information about the digital note concerned.
420: The first server 30A, having verified and signed the request, sends the signed request to the second server 30B for verification and signing. 422: The second server communicates with its associated database 32B.
430: The second server 30B, having verified and signed the request, sends the signed (i.e. now cross-signed by two different servers) request to the third server 30C for verification and signing. 432: The third server communicates with its associated database 32C.
440: The third server 30C, having verified and signed the request, sends the signed (now cross-signed by three servers) request back to the second server 30B. 442: The second server communicates with its associated database again to perform a check on the request again.
450: The second server 30B sends the signed request back to the first server 30A. 452: The first server communicates with its associated database again to perform a check on the request again.
460: The first server returns results to the device 10A (and/or to other users/devices as appropriate, not illustrated).

Each server here is illustrated as situated external to the corresponding server but it could be internal.

### Client (user device) database

A user device enabled to participate in the present system contains in their storage a relevant database or table, to keep records of digital notes and transactions that the device has been involved with.

All or some of the following information or properties regarding digital notes are recorded in the device database (in other words, a digital note comprises all or some of these properties). For each note:
- Note ID, creation date, amount, amount unit, note class, private key - these fields are never changed.
- The owner signature is created preferably based on the note ID, amount, amount unit, note class.

A digital note is valid only after server verification. It is possible for a user device database to hold information about a note that is already invalidated (due to being transferred or sold previously). When a note becomes invalid, it is removed from the device database if possible.

All or some of the following information or properties regarding transactions of the digital notes are recorded in the device database. For each transaction:
- A state indicating the global status of the transaction (CREATED, VERIFIED, PENDING, EXECUTED, CANCELLED).
- The private key and purchase order, used when buying currency from a store.
- A server signature that proves the transaction has been executed; the signature is based on the note ID, amount, amount unit, note class and owner signature.
- A reference to the message contact or group related to the transfer.
- A code referencing the target device of the transfer.

### Server database

All or some of the following information or properties regarding digital notes are recorded in the server database (in other words, a digital note comprises all or some of these properties). For each note:
- Note ID, creation date, amount, amount unit, note class - these fields are never changed.
- The owner signature is created preferably based on the note ID, amount, amount unit, note class. Once set the owner signature is not changed.
- When a note is transferred to a target device, the target device uses another note ID and the old note has a termination date set. A termination date is also set if the note is otherwise used or changed, e.g. sold, split or merged.
- The owner device public key is not stored.

In the event of a note being bought or sold, additional information may be stored that relates to purchase/selling orders. For example: an owner signature that signed the challenge token, a vendor token, a vendor order identification number, store ident, merchant type.

It is noted that the server and client device(s) have different database models. The list of transactions is only known within a device and not in a server. Having a digital note in a device database does not prove the device owns it; a verification is to be made by the server based on its own database whether the note is still valid.

### Security

The herein disclosed system, architecture and methods of digital resource processing are highly advantageous in providing enhanced security in a different way to existing systems. Some preferable further aspects are described below.

A user device communicates with the server through an SSL connection. Servers communicate with each other through a dedicated SSL connection on a specific port, which is only allowed within the servers (i.e. not opened to the public). A server should be considered trusted by other servers before participating in the signing process or being added to a signing chain. Each server has a dedicated and private Ed25519 key to sign a digital note. The server private key is not backed up; if it is lost, the server generates a new Ed25519 key, which is to be approved by multiple platform administrators.

On the device, it is not possible for someone who does not have the database key to access its content; for example, SQLcipher is used to encrypt the database. If the device database is stolen, only if the database key is known can the digital resources registered in it be sold. The Ed25519 key can be protected by a user password that is asked before doing a transaction; in that case, even if the SQLcipher and the database key are stolen, it is not possible to use the Ed25519 key: it becomes impossible to sell existing notes. When trying to inject a digital note one cannot inject invalid information due to the multi-signature made by the server; such a note would be considered invalid.

The server database does not contain user data. Even if the server database is stolen, the notes cannot be sold or other used because the private key that signs the note is only known by the note owner. To add a note to the database, it is necessary to create a valid note signature with a server, preferably at least two servers, which are known to other servers.

As described in the preferred embodiments above, an overall architecture is herein disclosed, that involves digital resources (e.g. representing a virtual currency) implemented under a bespoke secure system of at least one authorised central server and client (user) devices. Transactions are server-mediated but anonymised: the servers facilitate transfers between devices by verifying ownership details but without retaining them, and cannot identify who owns the digital resources or currency. It makes use of cryptographic security: transactions rely on cryptographic signatures and private key ownership instead of user accounts. However, the digital resources are managed by a single organisation, rather than a decentralised network, and thus do not embody a cryptocurrency as it is normally understood.

It is thus herein disclosed a method of processing a digital resource, comprising verifying ownership of the digital resource by a first device, wherein the digital resource is recorded in the first device and in a database of a server, wherein the digital resource comprises an owner signature. Correspondingly, the disclosure also encompasses: a first device operable to process a digital resource, the first device comprising means to generate a first public key and a first private key using a cryptographic algorithm, means to send a request for a challenge along with the first public key to a server, means to receive a first challenge from the server, and means to sign the first challenge with the first private key, wherein some or all of the means comprise a processing means (such as a processor) and a storage means (such as a database) of the first device; a server operable to process a digital resource, the server comprising means to receive a request for a challenge and a first public key from a first device, means to send a first challenge to a first device, means to receive the signed first challenge from the first device, means to verify whether the digital resource is owned by the first device by checking the signed first challenge and the owner signature of the digital resource against the first public key, wherein some or all of the means comprise a processing means (such as a processor) and a storage means (such as a database) of the server. There is also disclosed a second device operable to process a digital resource, said second device comprising means to generate a second public key and a second private key using the cryptographic algorithm, means to send a request for a challenge along with the second public key to a server, means to receive a second challenge from the server, means to sign the second challenge with the second private key. Preferably, the first device further comprises means to send the digital resource and the signed first challenge to a second device; the server further comprises means to receive the digital resource and the signed second challenge alongside the signed first challenge from the second device, means to verify that the signed second challenge is signed by the second device by checking the signed second challenge against the second public key, and means to terminate ownership of the digital resource by the first device, and assigning ownership of a new digital resource to the second device upon successfully verifying that the digital resource is owned by the first device. There is disclosed a system comprising the first device and the server, and optionally the second device.

Furthermore, it is herein disclosed a method of creating a secure digital resource, comprising: receiving, at a first server, an initiation order from a first device; creating, at the first server, a digital resource based on one or more properties of the initiation order; signing, by the first server, the digital resource using a cryptographic algorithm to provide a first server signature in the digital resource to prove origin of the digital resource; sending, by the first server, the digital resource to the first device; signing, by the first device, the digital resource using the cryptographic algorithm to provide an owner signature in the digital resource to prove ownership of the digital resource by the first device; optionally sending the digital resource one or more other servers for further server signature(s) to verify the ownership of the digital resource; wherein a record of the digital resource is maintained at the first server or a database associated therewith.

The present invention is not to be limited by the above-described aspects and embodiments, and that many variations are within the scope of the appended claims. The various aspects and embodiments may be combined if necessary and appropriate. The drawings serve as exemplary illustrations of the invention only, to aid understanding of the invention.

## Claims

1. A method of processing a digital resource, comprising verifying ownership of the digital resource by a first device, wherein the digital resource is recorded in the first device and in a database of a first server, wherein the digital resource comprises an owner signature:
wherein verifying ownership of the digital resource comprises:
generating, at the first device, a first public key and a first private key using a cryptographic algorithm;
sending, by the first device, a request for a challenge along with the first public key to a first server;
receiving, at the first device, a first challenge from the first server;
signing, by the first device, the first challenge with the first private key;
receiving, at the first server, the signed first challenge;
verifying, at the first server, whether the digital resource is owned by the first device by checking the signed first challenge and the owner signature against the first public key.

2. The method according to claim 1, further comprising, after the step of signing the first challenge with the first private key:
sending, by the first device, the digital resource and the signed first challenge to a second device;
generating, at the second device, a second public key and a second private key using the cryptographic algorithm;
sending, by the second device, a request for a challenge along with the second public key to the first server;
receiving, at the second device, a second challenge from the first server;
signing, by the second device, the second challenge with the second private key;
receiving, at the first server, the digital resource and the signed second challenge, alongside said signed first challenge, from the second device;
verifying, at the first server, that the signed second challenge is signed by the second device by checking the signed second challenge against the second public key;
wherein the method further comprises, upon successfully verifying that the digital resource is owned by the first device:
terminating ownership of the digital resource by the first device, and assigning ownership of a new digital resource to the second device.

3. The method according to claim 2, wherein the step of sending by the first device, the digital resource and the signed first challenge to a second device comprises establishing a direct peer-to-peer connection between the first device and the second device.

4. The method according to any one of the preceding claims, wherein a new public key and a new private key are generated by the first device at every instance of verifying ownership.

5. The method according to any one of the preceding claims, wherein the owner signature is a signature that is previously generated by the first device using the cryptographic algorithm to prove ownership of the digital resource by the first device at that time.

6. The method according to any one of the preceding claims, wherein the digital resource further comprises a server signature that is previously generated by one of a plurality of servers using the cryptographic algorithm to prove origin of the digital resource, wherein the plurality of servers comprise the first server.

7. The method according to claim 6, wherein the digital resource comprises a plurality of server signatures, wherein each server signature is previously generated by a respective different one of the plurality of servers.

8. The method according to any one of the preceding claims, wherein the first public key and first private key are generated based on one or more properties of the digital resource.

9. The method according to any one of the preceding claims, further comprising, subsequent to successfully verifying that the digital resource is owned by the first device:
implementing a transaction order involving the digital resource.

10. The method according to claim 9, wherein the first public key and first private key are generated based on the transaction order.

11. The method according to claim 2, wherein the digital resource comprises a first identification string and the new digital resource comprises a second identification string that is different from the first identification string.

12. The method according to claim 2 or 11, wherein the digital resource is associated with a first property and the new digital resource is associated with a second property identical to the first property.

13. The method according to claim 12, wherein each of the first property and second property is a value represented as a fraction of two integer values.

14. The method according to any one of the preceding claims, wherein the cryptographic algorithm is Ed25519.

15. A system, comprising one or more servers and one or more devices, configured to carry out the method according to any one of the preceding claims.
